# EUROPEAN PATENT APPLICATION

(11) **EP 3 006 490 A1**
(43) Date of publication of application: **13.04.2016**
(21) Application number: 14807987.4
(22) Date of filing: 09.05.2014
(51) Int. Cl.: C08J 7/00

(54) **RESIN-RUBBER COMPOSITE**

(30) Priority: 03.06.2013 JP 2013116623
(71) Applicant: NOK Corporation, Minato-ku Tokyo 105-8585 (JP)
(72) Inventor: AOYAGI Yuichi, Fujisawa-shi Kanagawa 251-0042 (JP)
(74) Representative: Adam, Holger
(86) International application number: PCT/JP2014/062492
(87) International publication number: WO 2014/196312

(57) **Abstract**

A resin rubber composite comprising vulcanized rubber and a resin directly bonded to the vulcanized rubber without interposing an adhesive, wherein a surface of the vulcanized rubber is sequentially subjected to a low pressure plasma treatment using an inert gas, a low pressure plasma treatment using a hydrocarbon gas, and a low pressure plasma treatment using an inert gas. The resin rubber composite has an excellent effect in that although it is a resin rubber composite obtained by directly bonding a resin molded product and vulcanized rubber without interposing an adhesive to bond the resin and the rubber together, the adhesion is not significantly reduced with time even after the formation of the composite.

## Description

### TECHNICAL FIELD

The present invention relates to a resin rubber composite. More particularly, the present invention relates to a resin rubber composite in which a resin molded product and vulcanized rubber are directly bonded without interposing an adhesive.

### BACKGROUND ART

Combining resin molded product and vulcanized rubber into composites is generally performed by a method using an adhesive. However, the adhesion method using an adhesive has problems not only in that the process is complicated, requiring complicated process management and causing high costs, but also in that it is necessary to use large amounts of environmentally hazardous substances, such as organic solvents. Further, there is another disadvantage in that the adhesive is ran off by the molten resin during the production of the composite.

In contrast, Patent Documents 1 and 2 disclose methods for modifying the surface of vulcanized rubber by a plasma treatment, and bonding a resin thereto. According to the methods disclosed in these documents, the vulcanized rubber and the resin are bonded together immediately after the plasma treatment; however, it is difficult to maintain this bonding state over time. This is presumably because an antioxidant, paraffin wax, a plasticizer, sulfur, etc., blooms on the vulcanized rubber surface with time, thereby significantly reducing the adhesion.

### PRIOR ART DOCUMENTS

### PATENT DOCUMENTS

Patent Document 1 : JP-A-5-202208
Patent Document 2 : JP-A-9-216960

### OUTLINE OF THE INVENTION

### PROBLEM TO BE SOLVED BY THE INVENTION

An object of the present invention is to provide a resin rubber composite in which a resin molded product and vulcanized rubber are directly bonded without interposing an adhesive, wherein the adhesion is not significantly reduced with time even after the formation of the composite.

### MEANS FOR SOLVING THE PROBLEM

Such an object of the present invention is achieved by a resin rubber composite comprising vulcanized rubber and a resin directly bonded to the vulcanized rubber without interposing an adhesive, wherein a surface of the vulcanized rubber is sequentially subjected to a low pressure plasma treatment using an inert gas, a low pressure plasma treatment using a hydrocarbon gas, and a low pressure plasma treatment using an inert gas.

### EFFECT OF THE INVENTION

The resin rubber composite of the present invention has an excellent effect in that although it is a resin rubber composite obtained by directly bonding a resin molded product and vulcanized rubber without interposing an adhesive to bond the resin and the rubber together, the adhesion is not significantly reduced with time even after the formation of the composite.

### EMBODIMENTS FOR CARRYING OUT THE INVENTION

As the vulcanized rubber, vulcanized natural rubber, vulcanized EPDM, vulcanized nitrile rubber, vulcanized hydrogenated nitrile rubber, vulcanized acrylic rubber, vulcanized fluororubber, or the like can be used without limitation.

The surface of these vulcanized rubbers is sequentially subjected to a low pressure plasma treatment using an inert gas, a low pressure plasma treatment using a hydrocarbon gas, and a low pressure plasma treatment using an inert gas. When there are blooms on the rubber surface, the blooms are removed from the surface of the vulcanized rubber prior to each plasma treatment.

Blooms are removed, for example, by a washing treatment using a known method, such as alkali degreasing, organic solvent degreasing, or hydrocarbon degreasing, or by a low pressure plasma treatment in an oxygen or air atmosphere; preferably by a low pressure plasma treatment in an oxygen or air atmosphere. The low pressure plasma treatment is performed by introducing a vulcanized rubber molded product into a glass vacuum container equipped with two parallel plate electrodes, and in an oxygen or air atmosphere using a high frequency power source with a frequency of 40 kHz, 13.56 MHz, or the like, or a microwave power source with a frequency of 2.45 GHz, under the following conditions: pressure: about 10 to 1,000 Pa; output: about 10 to 30,000 W; and time: about 0.1 to 60 minutes. As a result of such treatment, bloom components are removed from the surface of the vulcanized rubber. This process is essential for vulcanized rubber surfaces on which blooms are formed, but is optional for vulcanized rubber surfaces on which no blooms are formed.

The vulcanized rubber surface (from which blooms have been removed) is first subjected to a low pressure plasma treatment using an inert gas (step 1). The low pressure plasma treatment is performed in a glass vacuum container equipped with two parallel plate electrodes in an inert gas atmosphere using a He gas, Ne gas, Ar gas, Kr gas, Xe gas, N₂ gas, or the like alone or as a mixture, preferably a He gas, Ar gas, or N₂ gas alone or as a mixture, more preferably an He gas alone, and using a high frequency power source with a frequency of 40 kHz, 13.56 MHz, or the like, or a microwave power source with a frequency of 2.45 GHz, under the following conditions: pressure: about 10 to 1,000 Pa; output: about 10 to 30,000 W; and time: about 0.1 to 60 minutes. This treatment improves the adhesion between a hydrocarbon plasma polymerized film to be subsequently formed and the vulcanized rubber.

Following the low pressure plasma treatment using an inert gas in step 1, a low pressure plasma treatment using a hydrocarbon gas is performed (step 2) in the same manner and under the same conditions as those of the low pressure plasma treatment of step 1. The hydrocarbon gas can be any hydrocarbon-based monomer. Specific examples thereof include at least one of aliphatic saturated hydrocarbons, such as methane, ethane, propane, and butane; aliphatic unsaturated hydrocarbons, such as ethylene, propylene, n-butene, isobutene, and acetylene; alicyclic hydrocarbons, such as cyclohexene and cyclohexane; aromatic hydrocarbons, such as styrene and benzene; and the like. Ethylene gas is preferably used. As a result of the formation of a hydrocarbon plasma polymerized film by this treatment, blooming of the vulcanized rubber component can be effectively prevented.

After the low pressure plasma treatment using a hydrocarbon gas in step 2, a low pressure plasma treatment using an inert gas is performed again (step 3). This low pressure plasma treatment is performed in the same manner and under the same conditions as those of the low pressure plasma treatment of step 1. This treatment can impart a functional group to the hydrocarbon plasma polymerized film, thereby firmly bonding a resin thereto.

As the resin bonded to the vulcanized rubber, any thermoplastic resin can be used without limitation. Examples thereof include polyamide-based resins, polyphenylene sulfide resins, polyimide resins, polyetheretherketone resins, polyethylene terephthalate resins, polybutylene terephthalate resins, polyethylene naphthalate resins, polycarbonate resins, and the like. Polyamide-based resins are preferably used.

As polyamide-based resins, examples of types of typical polyamides (PAs) and their monomers are shown below. Other examples include PA613, 3T, 6T, 6I, 9T, PA810, PA812, PA1010, PA1012, PA1212, PAPACM12, etc.; and alloys or blended resins thereof.

| Type | Starting material monomer |
|---|---|
| 46 | Tetramethylenediamine-adipate |
| 6 | ε-Caprolactam, ε-aminocaproic acid |
| 66 | Hexamethylenediamine-adipate |
| 610 | Hexamethylenediamine-sebacate |
| 612 | Hexamethylenediamine-dodecanoic diacid salt |
| 11 | ω-Aminoundecanoic acid |
| 12 | ω-Laurolactam, ω-aminododecanoic acid |

The thermoplastic resin can be one to which a filler, such as glass fiber, is suitably added in order to ensure the desired physical properties. Alternatively, a plural thermoplastic resins can be blended for use.

The bonding of a resin to the vulcanized rubber that has been subjected to the low pressure plasma treatments of steps 1 to 3 is performed in the following manner. Specifically, after the plasma treated vulcanized rubber is placed in a metal mold of an injection molding machine, a resin molten by heating to a temperature higher than the melting point of the resin is brought into contact with the surface of the vulcanized rubber by an injection molding method, followed by pressurization. A resin rubber composite is produced by these processes. Therefore, the shape of the vulcanized rubber to be formed into a composite may be any shape as long as it can be applied to the metal mold, and the shape of the resin to be formed into a composite with the vulcanized rubber may also be any shape.

### EXAMPLES

The following describes the present invention with reference to Examples.

### Example 1

| | |
|---|---|
| Natural rubber | 100 parts by weight |
| HAF carbon black | 55 parts by weight |
| Stearic acid (produced by Miyoshi Oil & Fat Co., Ltd.) | 1 part by weight |
| Zinc white (produced by Sakai Chemical Industry Co., Ltd.) | 5 parts by weight |
| Wax (Sunnock, produced by Ouchi Shinko Chemical Industrial Co., Ltd.) | 3 parts by weight |
| Antioxidant (Antage RD, produced by Kawaguchi Chemical Industry Co., Ltd.) | 0.6 part by weight |
| Antioxidant (Antage 3C, produced by Kawaguchi Chemical Industry Co., Ltd.) | 3 part by weight |
| Vulcanization accelerator (Nocceler MSA-G, produced by Ouchi Shinko Chemical Industrial Co., Ltd.) | 1 parts by weight |
| Sulfur | 6 parts by weight |

The above components were mixed and kneaded, and the kneaded product was subjected to compression molding under vulcanization conditions of 180°C and 4 minutes so that the thickness was 2 mm. The obtained rubber molded product was cut into the size of 20 x 40 x 2 mm, thereby obtaining a vulcanized rubber test piece.

Because blooms were observed on the surface of the obtained vulcanized rubber test piece, the blooms were removed first. The blooms were removed by introducing the vulcanized rubber test piece into a microwave plasma treatment device, and performing a low pressure plasma treatment by a microwave system in an oxygen atmosphere at a pressure of about 30 Pa under the following conditions: frequency: 2.45 GHz; output: 600 W; and 5 minutes.

After the blooms were removed, low pressure plasma treatments comprising the following three steps were performed.

### [Step 1]

The rubber test piece from which blooms had been removed was subjected to a low pressure plasma treatment by a microwave system in an He gas atmosphere at a pressure of about 30 Pa under the following conditions: frequency: 2.45 GHz; output: 600 W; and 1 minute.

### [Step 2]

Following step 1, the rubber test piece after the low pressure plasma treatment using an He gas was subjected to a low pressure plasma treatment by a microwave system in an ethylene gas atmosphere at a pressure of about 30 Pa under the following conditions: frequency: 2.45 GHz; output: 600 W; and 1 minute.

### [Step 3]

Following step 2, the rubber test piece after the ethylene gas low pressure plasma treatment was subjected to a low pressure plasma treatment by a microwave system in an He gas atmosphere at a pressure of about 30 Pa under the following conditions: frequency: 2.45 GHz, output: 600 W; and 1 minute.

After the completion of the above treatments, the rubber test piece was placed in a metal mold of an injection molding machine (HM7, made by Nissei Plastic Industrial Co., Ltd.; mold clamping pressure: 7 tons [686 MPa]). Then, a PA66 (Amilan CM3001-G30, produced by Toray Industries, Inc.) resin molten at a temperature of 285°C was brought into contact with the surface of the vulcanized rubber by an injection molding method, followed by pressurization at about 6 MPa, thereby producing a resin rubber composite having a resin layer (20 x 40 x 4 mm).

The rubber layer part of the resin rubber composite was forcibly peeled with pliers, and only the rubber remaining area ratio was measured. As a result, the rubber remaining area ratio after having left the composite for 10 minutes from its formation was 100%, and the rubber remaining area ratio after having left the composite for 24 hours was also 100%. In a general adhesion test, the bonding strength and rubber remaining area ratio of the obtained resin rubber composite are measured by a 90 degree peeling test according to JIS K6256 corresponding to ISO 813 and 814; however, bonding of rubber to a hydrocarbon plasma polymerized film causes significant slippage. For this reason, the rubber remaining area ratio was measured by the above-mentioned method.

### Example 2

In Example 1, an acetylene gas was used in place of the ethylene gas in step 2. As a result, the rubber remaining area ratio of the obtained resin rubber composite was 90% after the composite was left for 10 minutes after its formation, and 80% after the composite was left for 24 hours.

### Example 3

In Example 1, an propylene gas was used in place of the ethylene gas in step 2. As a result, the rubber remaining area ratio of the obtained resin rubber composite was 90% after the composite was left for 10 minutes after its formation, and 80% after the composite was left for 24 hours.

### Example 4

In Example 1, a methane gas was used in place of the ethylene gas in step 2. As a result, the rubber remaining area ratio of the obtained resin rubber composite was 90% after the composite was left for 10 minutes after its formation, and 80% after the composite was left for 24 hours.

### Example 5

In Example 1, an EPDM composition of the following formulation was used as the rubber composition, and subjected to compression molding under vulcanization conditions of 180°C and 6 minutes to form a vulcanized rubber test piece. Then, a resin rubber composite was obtained.

| | |
|---|---|
| EPDM (EP33, produced by JSR Corporation) | 100 parts by weight |
| HAF carbon black | 55 parts by weight |
| Stearic acid (produced by Miyoshi Oil & Fat Co., Ltd.) | 1 part by weight |
| Zinc white (produced by Sakai Chemical Industry Co., Ltd.) | 5 parts by weight |
| Diana Process Oil (PW-380, produced by Idemitsu Kosan Co., Ltd) | 5 parts by weight |
| Organic Peroxide (Percumyl D, produced by NOF Corporation) | 1.5 parts by weight |

The rubber remaining area ratio of the obtained resin rubber composite was 100% after having left the composite for 10 minutes from its formation, and 90% after having left the composite for 24 hours.

### Example 6

In Example 1, a nitrile rubber composition of the following formulation was used as the rubber composition, and subjected to compression molding under vulcanization conditions of 180°C and 4 minutes to form a vulcanized rubber test piece. Then, a resin rubber composite was obtained.

| | |
|---|---|
| Nitrile rubber (DN220, produced by Zeon Corporation) | 100 parts by weight |
| HAF carbon black | 50 parts by weight |
| Stearic acid | 1 part by weight |
| Zinc white (produced by Sakai Chemical Industry Co., Ltd.) | 5 parts by weight |
| Plasticizer (RS-107, produced by ADEKA; adipic acid ether ester) | 5 parts by weight |
| Antioxidant (Antage RD) | 1.5 part by weight |
| Antioxidant (Antage 3C) | 2 part by weight |
| Vulcanization accelerator (Nocceler TT, produced by Ouchi Shinko Chemical Industrial Co., Ltd.) | 0.6 parts by weight |
| Vulcanization accelerator (Nocceler CZ, produced by Ouchi Shinko Chemical Industrial Co., Ltd.) | 1.5 parts by weight |
| Sulfur | 0.5 parts by weight |

The rubber remaining area ratio of the obtained resin rubber composite was 100% after having left the composite for 10 minutes from its formation, and 90% after having left the composite for 24 hours.

### Example 7

In Example 1, a hydrogenated nitrile rubber composition of the following formulation was used as the rubber composition, and subjected to compression molding under vulcanization conditions of 180°C and 6 minutes to form a vulcanized rubber test piece. Then, a resin rubber composite was obtained.

| | |
|---|---|
| Hydrogenated nitrile rubber (Zetpol 2020, produced by Zeon Corporation) | 100 parts by weight |
| HAF carbon black | 50 parts by weight |
| Stearic acid | 1 part by weight |
| Zinc white (produced by Sakai Chemical Industry Co., Ltd.) | 5 parts by weight |
| Plasticizer (RS-107) | 5 parts by weight |
| Antioxidant (Antage RD) | 0.5 part by weight |
| Antioxidant (Nocrac MBZ, produced by Ouchi Shinko Chemical Industrial Co., Ltd.) | 0.6 parts by weight |
| Vulcanizing agent (VulCup40KE, produced by Hercules Inc.) | 8 parts by weight |

The rubber remaining area ratio of the obtained resin rubber composite was 100% after having left the composite for 10 minutes from its formation, and 90% after having left the composite for 24 hours.

### Example 8

In Example 1, an acrylic rubber composition of the following formulation was used as the rubber composition, and subjected to compression molding under vulcanization conditions of 180°C and 8 minutes to form a vulcanized rubber test piece. Then, a resin rubber composite was obtained.

| | |
|---|---|
| Acrylic rubber (PA-522HF, produced by Unimatec Co. Ltd.) | 100 parts by weight |
| HAF carbon black | 55 parts by weight |
| Stearic acid | 1 part by weight |
| Antioxidant (Naugard 445, produced by Shiraishi Calcium Kaisha, Ltd.) | 2 parts by weight |
| Processing aid (Struktol WB212, produced by Schill & Seilacher (GmbH&Co)) | 2 parts by weight |
| Processing aid (Phosphanol RL210, produced by Toho Chemical Industry Co., Ltd.) | 0.5 parts by weight |
| Vulcanization accelerator (Cheminox AC-6, produced by Unimatec Co., Ltd.) | 0.6 parts by weight |
| Vulcanization accelerator (Nocceler DT, produced by Ouchi Shinko Chemical Industrial | 2 parts by weight Co., Ltd.) |

The rubber remaining area ratio of the obtained resin rubber composite was 100% after having left the composite for 10 minutes from its formation, and also 100% after having left the composite for 24 hours.

### Example 9

In Example 1, a fluororubber composition of the following formulation was used as the rubber composition, and subjected to compression molding under vulcanization conditions of 180°C and 6 minutes to form a vulcanized rubber test piece. Then, a resin rubber composite was obtained.

| | |
|---|---|
| Fluororubber (Viton E45, produced by DuPont) | 100 parts by weight |
| Calcium metasilicate | 40 parts by weight |
| MT carbon black | 20 parts by weight |
| Magnesium oxide (Magnesia #150, produced by Kyowa Chemical Industry Co., Ltd.) | 6 parts by weight |
| Calcium hydroxide | 3 parts by weight |
| Vulcanizing agent (Curative #30, produced by DuPont) | 2 parts by weight |
| Vulcanization accelerator (Curative #20, produced by DuPont) | 1 part by weight |

The rubber remaining area ratio of the obtained resin rubber composite was 100% after having left the composite for 10 minutes from its formation, and 80% after having left the composite for 24 hours.

### Comparative Example 1

In Example 1, a resin rubber composite was obtained without removing blooms and without performing all of the low pressure plasma treatments of steps 1 to 3. The rubber remaining area ratio of the obtained resin rubber composite was 0% after having left the composite for 10 minutes from its formation.

### Comparative Example 2

In Example 1, a resin rubber composite was obtained without performing the plasma treatments of steps 2 to 3. The rubber remaining area ratio of the obtained resin rubber composite was 100% after having left the composite for 10 minutes from its formation, and 10% after having left the composite for 24 hours..

### Comparative Example 3

In Example 1, a resin rubber composite was obtained without performing the plasma treatments of step 3. The rubber remaining area ratio of the obtained resin rubber composite was 0% after having left the composite for 10 minutes from its formation.

### Comparative Example 4

In Example 1, a resin rubber composite was obtained using a gas mixture of He gas and ethylene gas (1:1) in the plasma treatment of step 1, and without performing the plasma treatments of steps 2 and 3. The rubber remaining area ratio of the obtained resin rubber composite was 0% after having left the composite for 10 minutes from its formation.

### Comparative Example 5

In Example 1, a resin rubber composite was obtained without removing blooms. The rubber remaining area ratio of the obtained resin rubber composite was 0% after having left the composite for 10 minutes from its formation.

### Comparative Example 6

In Example 1, a resin rubber composite was obtained without performing the plasma treatment of step 1. The rubber remaining area ratio of the obtained resin rubber composite was 30% after having left the composite for 10 minutes from its formation.

These results demonstrate the following.
(1) The resin rubber composites of the Examples exhibit strong adhesive strength even after 24 hours from their formation.
(2) The adhesion between the rubber and the resin is insufficient when: blooms are not removed at all, and none of the low pressure plasma treatments are performed (Comparative Example 1); the plasma treatment of step 3 is not performed, and the hydrocarbon plasma polymerized film has no functional group to be reacted with the resin (Comparative Example 3); a plasma polymerized film using hydrocarbon alone is not formed (Comparative Example 4); blooms are not removed even when blooms are observed on the vulcanized rubber surface (Comparative Example 5); and the plasma treatment using an He gas in step 1 is not performed, and the adhesion of the hydrocarbon plasma polymerized film to the rubber is low (Comparative Example 6).
(3) As disclosed in Patent Document 2 and the like, only when low pressure plasma treatments are performed only in an oxygen gas atmosphere and then in an He gas atmosphere, the rubber remaining area ratio is 10% after 24 hours have elapsed (Comparative Example 2), while the adhesion of the resulting resin rubber composite is excellent for 10 minutes after its formation.

## Claims

1. A resin rubber composite comprising vulcanized rubber and a resin directly bonded to the vulcanized rubber without interposing an adhesive, wherein a surface of the vulcanized rubber is sequentially subjected to a low pressure plasma treatment using an inert gas, a low pressure plasma treatment using a hydrocarbon gas, and a low pressure plasma treatment using an inert gas.

2. The resin rubber composite according to claim 1, wherein each plasma treatment is performed after blooms on the surface of the vulcanized rubber are previously removed.

3. The resin rubber composite according to claim 2, wherein the blooms are removed by a washing treatment or by a low pressure plasma treatment in an oxygen or air atmosphere.

4. The resin rubber composite according to claim 1 or 2, wherein the vulcanized rubber is vulcanized natural rubber, vulcanized EPDM, vulcanized nitrile rubber, vulcanized hydrogenated nitrile rubber, vulcanized acrylic rubber, or vulcanized fluororubber.

5. The resin rubber composite according to claim 1, wherein the low pressure plasma treatments using an inert gas are both performed as low pressure plasma treatments using an He gas.

6. The resin rubber composite according to claim 1, wherein the low pressure plasma treatment using a hydrocarbon gas is performed as a low pressure plasma treatment using an ethylene gas.

7. The resin rubber composite according to claim 1, wherein the resin is directly bonded to the surface of the vulcanized rubber by an injection molding method.

## Amended claims

### Amended claims under Art. 19.1 PCT

1. (Amended) A resin rubber composite comprising vulcanized rubber, from the surface of which blooms are previously removed, and a resin directly bonded to the vulcanized rubber without interposing an adhesive, wherein a surface of the vulcanized rubber is sequentially subjected to a low pressure plasma treatment using an inert gas, a low pressure plasma treatment using a hydrocarbon gas alone, and a low pressure plasma treatment using an inert gas.

2. (Deleted)

3. (Amended) The resin rubber composite according to claim 1, wherein the blooms are removed by a washing treatment or by a low pressure plasma treatment in an oxygen or air atmosphere.

4. (Amended) The resin rubber composite according to claim 1, wherein the vulcanized rubber is vulcanized natural rubber, vulcanized EPDM, vulcanized nitrile rubber, vulcanized hydrogenated nitrile rubber, vulcanized acrylic rubber, or vulcanized fluororubber.

5. The resin rubber composite according to claim 1, wherein the low pressure plasma treatments using an inert gas are both performed as low pressure plasma treatments using an He gas.

6. The resin rubber composite according to claim 1, wherein the low pressure plasma treatment using a hydrocarbon gas is performed as a low pressure plasma treatment using an ethylene gas.

7. The resin rubber composite according to claim 1, wherein the resin is directly bonded to the surface of the vulcanized rubber by an injection molding method.

Statement under Art. 19.1 PCT
The "vulcanized rubber" in claim 1 was amended to "vulcanized rubber, from the surface of which blooms are previously removed," based on the description of paragraph [0009]. Further, the "hydrocarbon gas" in claim 1 was amended to "hydrocarbon gas alone," based on the description of paragraph [0038], and claim 2 was cancelled.
